# EUROPÄISCHE PATENTSCHRIFT

(11) **EP 3 511 104 B1**
(45) Veröffentlichungstag und Bekanntmachung des Hinweises auf die Patenterteilung: **22.07.2020**
(21) Anmeldenummer: 18000888.0
(22) Anmeldetag: 12.11.2018
(51) Int. Cl.: B23K 9/20, B23K 9/08

(54) **SCHWEISSVORRICHTUNG ZUM AUFSCHWEISSEN VON BOLZEN AUF EIN WERKSTÜCK**
WELDING DEVICE FOR WELDING BOLTS TO A WORKPIECE
DISPOSITIF DE SOUDAGE DESTINÉ À SOUDER DES BOULONS SUR UNE PIÈCE À USINER

(30) Priorität: 13.12.2017 DE 102017011485
(43) Veröffentlichungstag der Anmeldung: 17.07.2019
(73) Patentinhaber: Köster & Co. GmbH, 58256 Ennepetal (DE)
(72) Erfinder: Trillmich, Rainer, 58540 Meinerzhagen (DE)
(74) Vertreter: Henseler, Daniela

(56) Entgegenhaltungen:
- DE-C1- 19 545 607
- "Trillmich: Bolzenschweißen in Übereinstimmung mit DIN EN ISO 14555", , 29. August 2004 (2004-08-29), XP055589780, Gefunden im Internet: URL:http://www.boltesvejsning.dk/pdf/pdf-0 0-07-01-002.pdf [gefunden am 2019-05-17]
- Dipl.-Ing. Andreas Jenicek,Dr.-Ing. Thomas Reiter: "Neue Technik beim Lichtbogenbolzenschweißen im Anlagenbau", 43. Sondertagung der SLV München , 26. Februar 2015 (2015-02-26), XP002791450, Gefunden im Internet: URL:https://docplayer.org/44164762-Neue-te chnik-beim-lichtbogenbolzenschweissen-im-a nlagenbau.html

## Beschreibung

Die Erfindung betrifft eine Schweißvorrichtung zum Aufschweißen von Bolzen auf ein Werkstück nach dem Oberbegriff des Anspruchs 1 (siehe, zum Beispiel die Abbildung 4 von "Trillmich: Bolzenschweißen in Übereinstimmung mit DIN EN ISO 14555").

Aus DE 20 2009 012 369 U1 ist eine Anordnung zum Aufschweißen von Schweißelementen auf ein Trägerelement bekannt, umfassend ein Schweißgerät, eine Haltevorrichtung zur Halterung des Trägerelements während dem Schweißvorgang, wobei das Schweißgerät und die Haltevorrichtung relativ zueinander beweglich sind. Die Anordnung umfasst ferner eine Steuervorrichtung zum Steuern der Bewegung zwischen Schweißgerät und Haltevorrichtung und eine Eingabevorrichtung zum Erzeugen von Steuerinformationen.

Das Bolzenschweißen ist ein sicheres und wirtschaftliches Schweißverfahren zur Befestigung von Schweißelementen auf einem Trägerelement. Dabei wird der gesamte Querschnitt des Schweißelements (Bolzen) mit einem Trägerelement, beispielsweise einer Ankerplatte, unlösbar verbunden. Die Schweißzeit beträgt selbst bei großen Bolzenquerschnitten von etwa 25 mm weniger als 1,5 Sekunden, der Schweißstrom beträgt bis zu 2500 A.

Das Bolzenschweißen wird beispielsweise eingesetzt im Massivbau zur Herstellung einer Verbindung zum Stahlbau. Dafür werden sogenannte Stahleinbauteile eingesetzt, die auf einer Seite mit Verankerungselementen versehen sind, die eine formschlüssige Verbindung mit dem Beton herstellen. Auf der Gegenseite können dann beliebige Teile durch Schweißen, Schrauben oder andere Verbindungsmethoden angebracht werden. In einer gängigen Ausführungsform werden Ankerplatten eingesetzt. Bei einer Ankerplatte sind mehrere Bolzen auf eine Stahlplatte oder ein Stahlprofil aufgeschweißt, deren Kopf nach dem Vergießen den Formschluss mit dem Beton herstellt. Das Befestigen der Bolzen erfolgt vorzugsweise durch Bolzenschweißen mit Hubzündung.

Die beim Bolzenschweißen verwendeten hohen Ströme verursachen starke Magnetfelder, die den zwischen dem Bolzen und dem Werkstück brennenden Lichtbogen aus seiner in Bezug auf die Werkstückoberfläche senkrechten Richtung ablenken können. Diese Erscheinung wird als Blaswirkung bezeichnet. Durch die Blaswirkung wird die aufzuschweißende Stirnfläche des Bolzens nicht gleichmäßig, sondern schief angeschmolzen. Eine solche Störung des korrekten Schweißablaufs hat die Folge, dass Unregelmäßigkeiten in der Schweißzone auftreten, die zu Nacharbeit bzw. Ausschuss führen. Durch die Minderwertigkeit der Schweißverbindungen infolge von Blaswirkung wird die Wirtschaftlichkeit und Akzeptanz des Bolzenschweißens negativ beeinflusst, da die erforderliche Nacharbeit zeitaufwendig ist.

Zur Verringerung der Blaswirkung auf den Lichtbogen beschreibt DE 195 45 607 C1, dass beim Bolzenschweißen auf freien Rohren oder Blechen der Lichtbogen durch eine zweiseitige Stromzuführung am Werkstück stabilisiert werden kann. Die Massezwingen sind am Werkstück so anzuklemmen, dass die Bolzenschweißpistole in der Mitte der Verbindungsstrecke beider Massezwingen auf das Werkstück aufgesetzt wird, so dass im Blech zwei Teilströme fließen, deren negative Wirkungen sich aufheben.

Beim Bolzenschweißen in der Nähe größerer Eisenmassen wird dagegen beispielsweise durch das DVS Merkblatt 0902 empfohlen, nur eine Stromzuführung zu verwenden und diese so anzuschließen, dass sich die den Lichtbogen beeinflussenden Blaswirkungen von der Eisenmasse und durch die einseitige Stromzuführung gegenseitig aufheben.

Weiter wird empfohlen, beim Schweißen von Bolzen in der Nähe des Randes eines Werkstücks eine sogenannte Ausgleichsmasse an den Rand zu platzieren, damit das sich durch den Rand und die Stromführung beeinflusste Magnetfeld des Schweißstroms den Lichtbogen möglichst wenig stört. Weiterhin beeinflussen externe Magnetfelder, wie das des zur Schweißpistole führenden Schweißstromkabels oder die Vormagnetisierung einer Werkstückunterlage, durch vielmaliges vorhergehendes Schweißen die resultierende Blaswirkung auf den Lichtbogen.

Die vorgenannten aus dem Stand der Technik bekannten Maßnahmen zur Verringerung der Blaswirkung sind zwar grundsätzlich wirksam, jedoch ist es für Schweißungen an realen Werkstücken aufgrund der Vielzahl der das Magnetfeld beeinflussenden Parameter oft nicht vorhersehbar, welche Maßnahme oder Kombination von Maßnahmen einen störungsfreien Schweißablauf bewirken. Auch sind nicht alle empfohlenen Maßnahmen an realen Werkstücken anwendbar, beispielsweise ist es kaum möglich, einen Bolzen am Rand einer Platte anzuschweißen und gleichzeitig zwei Werkstückklemmen so anzubringen, dass die Blaswirkung kompensiert wird.

Aufgabe der Erfindung ist es daher, eine Schweißvorrichtung zum Aufschweißen von Bolzen auf ein Werkstück zu schaffen, bei der der Vorgang des Bolzenschweißens verbessert ist und insbesondere die Ablenkung des Eigenmagnetfelds des Lichtbogens durch äußere Bedingungen verringert ist.

Diese Aufgabe wird gelöst durch die Merkmale des Anspruchs 1.

Die erfindungsgemäße Lösung stellt ab auf eine verbesserte Masseverteilung ferromagnetischer Stoffe. Die erfindungsgemäße Schweißvorrichtung weist hierfür eine Zuführ- und Positioniereinrichtung für einzelne ferromagnetische Festkörper wählbarer Masse auf, die zumindest für Schweißvorgänge an randbenachbarten Werkstückpositionen zeitweilig, insbesondere für die Dauer eines oder mehrerer Schweißvorgänge, auf dem Werkstück abstellbar sind. Durch die Positionierung des ferromagnetischen Festkörpers auf dem Werkstück bilden diese eine magnetisch wirksame Einheit, durch die das vom Schweißstrom hervorgerufene Magnetfeld im Bereich des Lichtbogens wählbar beeinflussbar ist. Die hohe magnetische Leitfähigkeit des ferromagnetischen Festkörpers bewirkt eine Bündelung des magnetischen Flusses in dem Festkörper und eine herabgesetzte Magnetfeldstärke randabgewandt zur Werkstückposition. Durch die randabgewandte Positionierung des ferromagnetischen Festkörpers als Ausgleichsmasse wird die Masseverteilung des Werkstücks derart ergänzt, dass die durch die Stromführung im Werkstück und die Werkstückränder hervorgerufene Blaswirkung zumindest teilweise kompensierbar ist. Die gegensätzlichen Wirkungen von Stromführung und Masseverteilung werden somit nutzbar gemacht, um eine Blaswirkung zu verringern.

Durch den zumindest teilweisen Ausgleich der Wirkungen von Stromführung und Masseverteilung kann eine verringerte Blaswirkung trotz unsymmetrischer Stromführung erreicht werden. Vorzugsweise wird nur eine Masseklemme verwendet, wodurch Montagezeit gegenüber der Verwendung von mehreren Klemmen eingespart werden kann.

Vorzugsweise sind die ferromagnetischen Festkörper auf dem Werkstück lösbar fixierbar, wodurch deren Position auf dem Werkstück während eines Schweißvorgangs festlegbar ist. Ferner wird durch die Fixierung die Kopplung des Werkstücks mit dem Festkörper zu einer magnetisch wirksamen Einheit erhöht. Besonders vorteilhaft ist die Verwendung von Permanentmagneten als ferromagnetische Festkörper. Durch Abstellen von Permanentmagneten als Ausgleichsmassen auf dem Werkstück wird zur Ausbildung der magnetisch wirksamen Einheit eine luftspaltfreie Verbindung mit dem Werkstück erzielt und die Ausgleichsmasse gleichzeitig auf dem Werkstück fixiert. Ferner kann die Feldstärke des Permanentmagneten vorteilhaft nutzbar gemacht werden zur weiteren Verringerung der Blaswirkung.

Vorteilhaft ist ferner, dass die erfindungsgemäße Schweißvorrichtung zur Automatisierung des Schweißprozesses geeignet ist. Dazu können die erste und/oder die zweite Zuführ- und Positioniereinrichtung an einem Roboter ausgebildet sein, der die Positionierung des Werkstücks gegenüber dem Schweißwerkzeug und die Handhabung der ferromagnetischen Festkörper automatisiert.

Weiterhin kann eine Steuerung vorgesehen sein zur Abspeicherung anzufahrender Werkstückpositionen. Insbesondere können beispielsweise für verschiedene Werkstücktypen einander zugeordnete Daten betreffend Schweißstellenpositionen, Befestigungspunkte der mindestens einen Massenklemme und Ausgleichsmassenpositionen gespeichert werden, um für den jeweils ausgewählten Werkstücktyp an den vorgesehenen Schweißstellen die Blaswirkung zu reduzieren.

Weitere Vorteile und Ausgestaltungen der Erfindung sind der nachfolgenden Beschreibung und den Unteransprüchen zu entnehmen,

Die Erfindung wird nachstehend anhand der in den beigefügten Abbildungen dargestellten Ausführungsbeispiele näher erläutert.

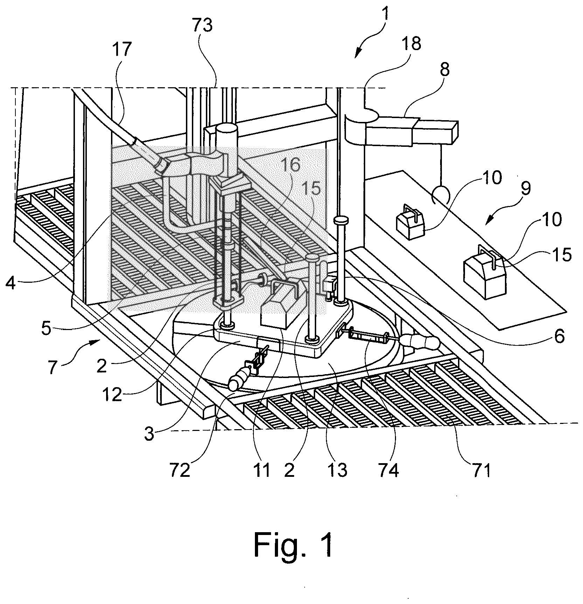

Fig. 1 zeigt schematisch eine perspektivische Ansicht einer erfindungsgemäßen Schweißvorrichtung.

Fig. 1 zeigt eine Schweißvorrichtung 1 zum Aufschweißen von Bolzen 2 auf ein Werkstück 3. Die Schweißvorrichtung 1 umfasst ein an eine Schweißstromquelle (nicht dargestellt) anschließbares Schweißwerkzeug 4 mit einem Bolzenhalter 5 und mindestens eine an dem Werkstück 2 befestigbare Massenklemme 6 zur Ausbildung einer Schaltanordnung zum Lichtbogenbolzenschweißen. Die Schweißstromquelle 1 umfasst weiterhin eine erste Zuführ- und Positioniereinrichtung 7 zum Verfahren von Schweißwerkzeug 4 und Werkstück 3 zueinander an zumindest randbenachbarte Werkstückpositionen 12 zum Anschweißen von Bolzen 2.

An der Schweißvorrichtung 1 ist ferner eine zweite Zuführ- und Positioniereinrichtung 8 vorgesehen, mit der aus einem Vorrat 9 einzelner ferromagnetischer Festkörper 10, 11 wählbarer Masse jeweils mindestens ein Festkörper 11 entnehmbar ist. Der mindestens eine Festkörper 11 ist mit der zweiten Zuführ- und Positioniereinrichtung 8 als eine die Masseverteilung des Werkstücks 3 ergänzende Ausgleichsmasse für randbenachbarte Werkstückpositionen 12 auf dem Werkstück 3 zeitweilig randabgewandt zur Werkstückposition 12 zur Veränderung der Masseverteilung des Werkstücks 3 gegenüber der Massenklemme 6 abstellbar.

Die im Ausführungsbeispiel gemäß Fig. 1 gezeigte erste Zuführ- und Positioniereinrichtung 7 für die Zuführung und Positionierung von Werkstücken 3 gegenüber dem Schweißwerkzeug 4 umfasst eine Rollenbahn 71 für die Zuführung des Werkstücks 3 in die Arbeitsposition und Weiterförderung nach Fertigbearbeitung. Zur Positionierung des Werkstücks 3 ist ein Drehteller 72 vorgesehen. Auf dem Drehteller 72 kann das Werkstück 3 mittels Zwingen 74 lösbar fixierbar sein. Das Schweißwerkzeug 4 ist gegenüber dem Drehteller 72 in im Wesentlichen senkrechter Richtung mit einer Linearführung 73 verfahrbar zum Aufschweißen eines Bolzens 2 an der Werkstückposition 12. Durch die Linearführung 73 kann das Schweißwerkzeug 4 fest an einem Gestell 18 der Schweißvorrichtung 1 montiert sein und manuell oder kraftbetätigt in die Schweißposition verfahren werden. Alternativ oder zusätzlich zu einem Drehteller 72 kann ein Kreuztisch für eine x-y-Verschiebbarkeit des Werkstücks 3 gegenüber dem Schweißwerkzeug 4 verwendet werden.

Die zweite Zuführ- und Positioniereinrichtung 8 ist im Ausführungsbeispiel gemäß Fig.1 beispielhaft als ein Greifarm ausgebildet, mit dem ferromagnetische Festkörper 10 aus dem Vorrat 9 entnehmbar und auf dem Werkstück 3 an vorgebbaren Positionen abstellbar sind. Die zweite Zuführ- und Positioniereinrichtung 8 kann an dem Gestell 18 der Schweißvorrichtung 1 fixiert sein oder zusammen mit dem Schweißwerkzeug 4 durch die erste Zuführ- und Positioniereinrichtung 7 gegenüber dem Werkstück 3 verfahrbar sein.

Alternativ kann die zweite Zuführ- und Positioniereinrichtung 8 durch an den ferromagnetischen Festkörpern 10, 11 ausgebildete Handhabungsmittel 15 und eine Nachschlagetabelle ausgebildet sein, die Zuordnungen von Werkstückpositionen 12, Befestigungsstellen der Massenklemme 6 und Position eines auszuwählenden ferromagnetischen Festkörpers 11 enthält für eine händische Platzierung des Festkörpers 11 auf dem Werkstück 3 für die Dauer des jeweiligen Schweißvorgangs.

Die erste 7 und/oder die zweite 8 Zuführ- und Positioniereinrichtung können an einem Roboter ausgebildet sein. Durch den Roboter sind die Bewegungsabfolgen der Zuführ- und Positioniereinrichtungen programmierbar, wodurch der Schweißprozess unter Platzierung von Ausgleichsmassen automatisierbar ist. Vorzugsweise sind die erste 7 und/oder zweite 8 Zuführ- und Positioniereinrichtung an eine Steuerung anschließbar, in der anzufahrende Werkstückpositionen 12 abspeicherbar sind. Beispielsweise durch Probeschweißungen oder Simulationen empirisch ermittelte Ergebnisse über Größe und Position der bei der jeweiligen Werkstückposition auf einem jeweiligen Werkstücktyp erforderlichen ferromagnetischen Masse sind so für nachfolgende Schweißprozesse desselben Typs wiederholt abrufbar.

Es kann auch vorgesehen sein, dass die zweite Zuführ- und Positioniereinrichtung 8 mit einer Steuerung verbunden ist, die einen Algorithmus zur Berechnung der Auswahl und Positionierung des mindestens einen ferromagnetischen Festkörpers 11 aufweist. Die Berechnung erfolgt vorzugsweise auf Grundlage von das Werkstück 3 charakterisierenden Kenngrößen, wie Abmessungen und Materialparametern, sowie der Werkstückposition 12 in Bezug auf die Werkstückränder und den Befestigungspunkt der mindestens einen Massenklemme 6.

Die ferromagnetischen Festkörper 10, 11 können auf dem Werkstück 3 lösbar fixierbar sein. Vorzugsweise sind die ferromagnetischen Festkörper 10, 11 des Vorrats 9 als Permanentmagnete ausgebildet. Durch Absenken der Permanentmagnete auf die Werkstückoberfläche können die ferromagnetischen Festkörper 10, 11 dann auf dem Werkstück 3 fixiert werden. Der Permanentmagnet kann in einem Gehäuse vorgesehen sein, gegenüber dem er mittels eines Hebels 16 auf die Oberfläche des Werkstücks 3 absenkbar und von dieser abhebbar ist. Die Ausgleichsmasse geht dann mit dem Werkstück 3 eine lösbare, luftspaltfreie Verbindung zur Ausbildung einer magnetisch wirksamen Einheit ein.

Besonders bevorzugt ist die Feldstärke mindestens eines Permanentmagneten derart gewählt, dass das Magnetfeld des Permanentmagneten das von der Schaltanordnung hervorgerufene Magnetfeld überlagert zur Verringerung einer auf den Lichtbogen wirkenden Blaswirkung. Das Werkstück 3 wird durch den Permanentmagneten vormagnetisiert zur Ausbildung eines Eigenmagnetfelds des Werkstücks 3. Dieses ist während des Schweißvorgangs überlagerbar durch das vom Schweißstrom hervorgerufene Magnetfeld. Neben der Wahl der Feldstärke des Permanentmagneten kann durch die Winkelorientierung des Permanentmagneten bei der Positionierung auf dem Werkstück 3 Einfluss genommen werden auf das am Rand des Werkstücks 3 austretende, den Lichtbogen beeinflussende Magnetfeld.

Bei der erfindungsgemäßen Schweißvorrichtung 1 können mehrere Massenklemmen 6 zur Befestigung an dem Werkstück 3 vorgesehen sein, die jeweils durch Schalter der Schaltanordnung von der Schweißstromquelle trennbar sind zur Auswahl von mindestens einem sich zwischen Bolzen 2 und Massenklemme 6 ausbildenden Strompfad durch das Werkstück 3. Die Verwendung von mehreren Massenklemmen 6 bietet den Vorteil, dass ohne Umklemmen von Massenklemmen an einer Vielzahl von Werkstückpositionen 12 Bolzen 2 aufgeschweißt werden können. Durch die Aktivierung unterschiedlicher Massenklemmen 6 für randbenachbarte Schweißungen an unterschiedlichen Randpositionen des Werkstücks 3 mittels der Schalter wird ermöglicht, jeweils einen Strompfad durch das Werkstück auszuwählen, der eine randabgewandte Komponente aufweist und dadurch einer randbedingten Blaswirkung entgegenwirkt.

Vorzugsweise ist der ferromagnetische Festkörper 11 auf einem sich zwischen Bolzen 2 und Massenklemme 6 ausbildenden Strompfad abstellbar. Üblicherweise führt eine einseitige Stromführung entlang eines Strompfads durch das Werkstück 3 zu einer Überkompensation einer randbedingten Blaswirkung durch Ausübung einer erheblichen, weg von der Massenklemme 6 gerichteten Kraft auf den Lichtbogen. Durch Platzierung des ferromagnetischen Festkörpers 11 auf dem Strompfad kann diese überschießende Kompensation ausgeglichen werden.

Besonders bevorzugt wird bei randbenachbarten Werkstückpositionen 12 nur eine Massenklemme 6 für die Stromrückführung aktiviert bzw. verwendet, die an einem der Werkstückposition 12 gegenüberliegenden Rand des Werkstücks befestigt ist.

Die mindestens eine Massenklemme 6 kann beispielsweise manuell oder pneumatisch an das Werkstück 3 geklemmt werden.

Vorzugsweise ist das Werkstück 3 für den Schweißvorgang auf einer bewegbaren Werkstückunterlage 13 fixierbar. In Fig. 1 ist die Werkstückunterlage 13 beispielsweise auf dem Drehteller 72 bewegbar und durch Zwingen 74 fixierbar.

Die Werkstückunterlage 13 ist vorzugsweise aus einem nicht magnetisierbaren Material, wie beispielsweise Holz, Kunststoff oder Aluminium hergestellt. Die Werkstückunterlage 13 nimmt dann einen vernachlässigbaren Einfluss auf die Ausbreitung des Magnetfelds. Die Blaswirkung bei sämtlichen Schweißvorgängen wird im Wesentlichen nur noch vom Werkstück 3 und dem ausgewählten ferromagnetischen Festkörper 11 und insbesondere nicht durch Vormagnetisierungen der Werkstückunterlage 13 beeinflusst.

Die Winkelorientierung des außenliegenden Schweißkabels 17 des Schweißwerkzeugs 4 kann zur zusätzlichen Beeinflussung des Lichtbogens nutzbar gemacht werden.

Die erfindungsgemäße Schweißvorrichtung 1 wird in einem Schweißverfahren wie folgt betrieben:
Das Schweißwerkzeug 4 wird an eine Schweißstromquelle angeschlossen und zumindest eine Massenklemme 6 wird an dem Werkstück 3 befestigt zur Ausbildung einer Schaltanordnung zum Lichtbogenbolzenschweißen. Mittels der ersten Zuführ- und Positioniereinrichtung 7 werden das Schweißwerkzeug 4 und das Werkstück 3 zueinander an eine randbenachbarte Werkstückposition 12 zum Anschweißen eines Bolzens 2 verfahren. Die zweite Zuführ- und Positioniereinrichtung 8 entnimmt aus einem Vorrat 9 einzelner ferromagnetischer Festkörper 10, 11 wählbarer Masse mindestens einen Festkörper 11. Der Festkörper 11 wird von der zweiten Zuführ- und Positioniereinrichtung 8 als eine die Masseverteilung des Werkstücks 3 ergänzende Ausgleichsmasse auf dem Werkstück 3 zeitweilig randabgewandt zur Werkstückposition 12 zur Veränderung der Masseverteilung des Werkstücks 3 gegenüber der Massenklemme 6 abgestellt.

Anschließend führt das Schweißwerkzeug 4 einen Schweißvorgang an der Werkstückposition 13 mit durch die Ausgleichsmasse verminderter Blaswirkung durch.

## Patentansprüche

1. Schweißvorrichtung zum Aufschweißen von Bolzen (2) auf ein Werkstück (3), umfassend ein an eine Schweißstromquelle anschließbares Schweißwerkzeug (4) mit einem Bolzenhalter (5), mindestens eine an dem Werkstück (3) befestigbare Massenklemme (6) zur Ausbildung einer Schaltanordnung zum Lichtbogenbolzenschweißen und eine erste Zuführ- und Positioniereinrichtung (7) zum Verfahren von Schweißwerkzeug (4) und Werkstück (3) zueinander an zumindest randbenachbarte Werkstückpositionen (12) zum Anschweißen von Bolzen (2), **dadurch gekennzeichnet, dass** eine zweite Zuführ- und Positioniereinrichtung (8) vorgesehen ist, mit der aus einem Vorrat (9) einzelner ferromagnetischer Festkörper (10, 11) wählbarer Masse jeweils mindestens ein Festkörper (11) entnehmbar und als eine die Masseverteilung des Werkstücks (3) ergänzende Ausgleichsmasse für randbenachbarte Werkstückpositionen (12) auf dem Werkstück (3) zeitweilig randabgewandt zur Werkstückposition (12) zur Veränderung der Masseverteilung des Werkstücks (3) gegenüber der Massenklemme (6) abstellbar ist.

2. Schweißvorrichtung nach Anspruch 1, **dadurch gekennzeichnet, dass** die ferromagnetischen Festkörper (10, 11) auf dem Werkstück (3) lösbar fixierbar sind.

3. Schweißvorrichtung nach Anspruch 1 oder 2, **dadurch gekennzeichnet, dass** die ferromagnetischen Festkörper (10, 11) des Vorrats (9) als Permanentmagnete ausgebildet sind.

4. Schweißvorrichtung nach Anspruch 3, **dadurch gekennzeichnet, dass** die Feldstärke mindestens eines Permanentmagneten derart gewählt ist, dass das Magnetfeld des Permanentmagneten das von der Schaltanordnung hervorgerufene Magnetfeld überlagert zur Verringerung einer auf den Lichtbogen wirkenden Blaswirkung.

5. Schweißvorrichtung nach einem der Ansprüche 1 bis 4, **dadurch gekennzeichnet, dass** die erste (7) und/oder die zweite (8) Zuführ- und Positioniereinrichtung an einem Roboter ausgebildet sind.

6. Schweißvorrichtung nach einem der Ansprüche 1 bis 5, **dadurch gekennzeichnet, dass** die erste (7) und/oder zweite (8) Zuführ- und Positioniereinrichtung an eine Steuerung anschließbar sind, in der anzufahrende Werkstückpositionen (12) abspeicherbar sind.

7. Schweißvorrichtung nach einem der Ansprüche 1 bis 6, **dadurch gekennzeichnet, dass** mehrere Massenklemmen (6) zur Befestigung an dem Werkstück (3) vorgesehen sind, die jeweils durch Schalter der Schaltanordnung von der Schweißstromquelle trennbar sind zur Auswahl von mindestens einem sich zwischen Bolzen (2) und Massenklemme (6) ausbildenden Strompfad durch das Werkstück (3).

8. Schweißvorrichtung nach einem der Ansprüche 1 bis 7, **dadurch gekennzeichnet, dass** der ferromagnetische Festkörper (11) auf einem sich zwischen Bolzen (2) und Massenklemme (6) ausbildenden Strompfad abstellbar ist.

9. Schweißvorrichtung nach einem der Ansprüche 1 bis 8, **dadurch gekennzeichnet, dass** das Werkstück (3) für den Schweißvorgang auf einer bewegbaren Werkstückunterlage (13) fixierbar ist.

## Claims

1. Welding device for welding studs (2) onto a workpiece (3), comprising a welding tool (4), which can be connected to a welding current source and has a stud holder (5), at least one mass clamp (6), which can be fastened to the workpiece (3) and is suitable for forming a control arrangement for arc stud welding, and a first feeding and positioning device (7) for moving the welding tool (4) and the workpiece (3) in relation to one another to at least peripherally adjacent workpiece positions (12) for welding on studs (2), **characterized in that** a second feeding and positioning device (8) is provided, with which at least one solid body (11) in each case can be removed from a store (9) of individual ferromagnetic solid bodies (10, 11) of selectable mass and a compensating mass, making up the mass distribution of the workpiece (3), for peripherally adjacent workpiece positions (12) can be set down for a time on the workpiece (3) peripherally remotely in relation to the workpiece position (12) for changing the mass distribution of the workpiece (3) with respect to the mass clamp (6).

2. Welding device according to Claim 1, **characterized in that** the ferromagnetic solid bodies (10, 11) can be releasably fixed on the workpiece (3).

3. Welding device according to Claim 1 or 2, **characterized in that** the ferromagnetic solid bodies (10, 11) of the store (9) are formed as permanent magnets.

4. Welding device according to Claim 3, **characterized in that** the field strength of at least one permanent magnet is chosen such that the magnetic field of the permanent magnet overlies the magnetic field induced by the switching arrangement to reduce a blow effect acting on the arc.

5. Welding device according to one of Claims 1 to 4, **characterized in that** the first feeding and positioning device (7) and/or the second feeding and positioning device (8) are formed on a robot.

6. Welding device according to one of Claims 1 to 5, **characterized in that** the first feeding and positioning device (7) and/or the second feeding and positioning device (8) can be connected to a controller, in which workpiece positions (12) to be moved to can be stored.

7. Welding device according to one of Claims 1 to 6, **characterized in that** a number of mass clamps (6) for fastening on the workpiece (3) are provided, which can be disconnected from the welding current source in each case by switches of the switching arrangement for the selection of at least one current path through the workpiece (3) that forms between the stud (2) and the mass clamp (6).

8. Welding device according to one of Claims 1 to 7, **characterized in that** the ferromagnetic solid body (11) can be set down on a current path that forms between the stud (2) and the mass clamp (6).

9. Welding device according to one of Claims 1 to 8, **characterized in that** the workpiece (3) can be fixed for the welding operation on a movable workpiece support (13).

## Revendications

1. Dispositif de soudage pour le soudage de boulons (2) sur une pièce à usiner (3), comprenant un outil de soudage (4) pouvant être raccordé à une source de courant de soudage avec un porte-boulon (5), au moins une borne de masse (6) pouvant être fixée à la pièce à usiner (3) pour la réalisation d'un agencement de commutation pour le soudage de boulon à l'arc et un premier dispositif d'amenée et de positionnement (7) pour le déplacement de l'outil de soudage (4) et de la pièce à usiner (3) l'un par rapport à l'autre au niveau des positions de pièce à usiner (12) au moins contigües au bord pour le soudage de boulons (2), **caractérisé en ce qu'**un second dispositif d'amenée et de positionnement (8) est prévu, avec lequel respectivement au moins un corps solide (11) peut être retiré d'une réserve (9) de corps solides (10, 11) ferromagnétiques individuels d'une masse sélectionnable et peut être déposé comme une masse d'équilibrage complétant la distribution de masse de la pièce à usiner (3) pour des positions de pièces à usiner (12) contigües au bord sur la pièce à usiner (3) en étant temporairement éloigné du bord par rapport à la position de pièce à usiner (12) pour la modification de la distribution de masse de la pièce à usiner (3) par rapport à la borne de masse (6).

2. Dispositif de soudage selon la revendication 1, **caractérisé en ce que** les corps solides (10, 11) ferromagnétiques peuvent être fixés de manière détachable sur la pièce à usiner (3).

3. Dispositif de soudage selon la revendication 1 ou 2, **caractérisé en ce que** les corps solides (10, 11) ferromagnétiques de la réserve (9) sont réalisés comme aimants permanents.

4. Dispositif de soudage selon la revendication 3, **caractérisé en ce que** l'intensité de champ d'au moins un aimant permanent est choisie de telle manière que le champ magnétique de l'aimant permanent se superpose au champ magnétique suscité par l'agencement de commutation pour la diminution d'une action de soufflage agissant sur l'arc électrique.

5. Dispositif de soudage selon l'une des revendications 1 à 4, **caractérisé en ce que** le premier (7) et/ou le second (8) dispositif d'amenée et de positionnement sont réalisés au niveau d'un robot.

6. Dispositif de soudage selon l'une des revendications 1 à 5, **caractérisé en ce que** le premier (7) et/ou le second (8) dispositif d'amenée et de positionnement peuvent être raccordés à une commande, dans laquelle des positions de pièces à usiner (12) à démarrer peuvent être enregistrées.

7. Dispositif de soudage selon l'une des revendications 1 à 6, **caractérisé en ce que** plusieurs bornes de masse (6) sont prévues pour la fixation à la pièce à usiner (3), lesquelles peuvent être séparées de la source de courant de soudage respectivement par des commutateurs de l'agencement de commutation pour la sélection d'au moins un trajet de courant se réalisant entre le boulon (2) et la borne de masse (6) à travers la pièce à usiner (3).

8. Dispositif de soudage selon l'une des revendications 1 à 7, **caractérisé en ce que** le corps solide (11) ferromagnétique peut être déposé sur un trajet de courant se réalisant entre le boulon (2) et la borne de masse (6).

9. Dispositif de soudage selon l'une des revendications 1 à 8, **caractérisé en ce que** la pièce à usiner (3) peut être fixée pour le processus de soudage sur un support de pièce à usiner (13) mobile.
